# EUROPÄISCHE PATENTSCHRIFT

(11) **EP 1 484 126 B1**
(45) Veröffentlichungstag und Bekanntmachung des Hinweises auf die Patenterteilung: **26.03.2008**
(21) Anmeldenummer: 04012959.5
(22) Anmeldetag: 02.06.2004
(51) Int. Cl.: B23B 41/02, B23B 49/02

(54) **Bohrmaschine, insbesondere zur Tieflochbohrung**
Deep hole drill
Foret pour trous profonde

(30) Priorität: 03.06.2003 DE 10325066
(43) Veröffentlichungstag der Anmeldung: 08.12.2004
(73) Patentinhaber: Buck, Helmut, 91622 Rügland (DE)
(72) Erfinder: Buck, Helmut, 91622 Rügland (DE)
(74) Vertreter: Hofmann, Matthias

(56) Entgegenhaltungen:
- DE-B- 1 140 047
- DE-C- 4 318 830
- FR-A- 705 225

## Beschreibung

Die Erfindung betrifft eine Bohrmaschine, insbesondere zur Tieflochbohrung, nach dem Oberbegriff des Anspruchs 1.

Eine derartige Bohrmaschine ist aus der DE 43 18 830 C1 bekannt. Als Bohrer wird nachfolgend allgemein das in einer derartigen Bohrmaschine einsetzbare materialabtragende Werkzeug bezeichnet. Hierbei kann es sich, wie auch in der DE 43 18 830 C1 erwähnt, auch um ein Fräswerkzeug handeln. Wird der Bohrkopf der bekannten Tiefloch-Bohrmaschine an eine nicht senkrecht zur Längsachse des Bohrers orientierte Materialwand aufgesetzt, so ist dies zwangsläufig mit einem sich erweiternden Spalt zwischen dem Bohrkopf und der Materialwand verbunden. Durch diesen Spalt können unerwünscht Späne oder Schmiermittel austreten. Ferner kann ein derartiger Spalt die Führungseigenschaften der Führungseinrichtung beeinträchtigen.

Es ist daher die Aufgabe der vorliegenden Erfindung, eine Bohrmaschine der eingangs genannten Art derart weiterzubilden, dass der Kontakt der Bohrmaschine, insbesondere des Bohrkopfs, am zu bearbeitenden Material verbessert ist.

Diese Aufgabe ist erfindungsgemäß gelöst durch eine Bohrmaschine mit den Merkmalen des Kennzeichens des Anspruches 1.

Erfindungsgemäß wurde erkannt, dass die Anbindung der Bohrmaschine, insbesondere des Bohrkopfes, an einer zu bearbeitenden Materialwand entscheidend verbessert werden kann, wenn die mit der zu bearbeitenden Materialwand in Kontakt kommende Kontaktwand der Bohrmaschine beweglich ausgestaltet ist. Der Anbohrkörper bildet mit Hilfe der Kontaktwand auf diese Weise eine Sperre gegen austretende Späne bzw. gegen austretendes Schmier- oder Kühlmittel. Durch das nunmehr flächige Auflegen der Kontaktwand der Bohrmaschine auf der zu bearbeitenden Materialwand können zudem die Führungseigenschaften der Führungseinrichtung verbessert werden.

Eine Lagereinheit gemäß Anspruch 2 gewährleistet eine freie Beweglichkeit der Kontaktwand.

Die Verbindung des Anbohrkörpers mit der Führungseinrichtung über einen Verbindungskörper gemäß Anspruch 3 ist konstruktiv unaufwändig.

Ein Verbindungskörper gemäß Anspruch 4 verbessert die Lagerung des Anbohrkörpers.

Mit einem Verbindungskörper nach Anspruch 5, insbesondere einem Klemmkörper, kann zudem der Widerstand eingestellt werden, den der Anbohrkörper einer Verlagerung entgegensetzt. Eine ungewollte Verlagerung kann auf diese Weise verhindert werden.

Eine Führungsbuchse nach den Ansprüchen 6 oder 7 verbessert die Lagerung des Anbohrkörpers zusätzlich.

Mit Hilfe einer auswechselbaren Führungsbuchse nach Anspruch 8 sind mit der Bohrmaschine verschiedene Bohrer einsetzbar.

Eine Schnell-Verriegelungseinrichtung nach Anspruch 9, z. B. mittels eines Bajonett-Verschlusses, gewährleistet eine schnelle Austauschbarkeit der Führungseinrichtung und des Anbohrkörpers.

Eine Sicherungseinrichtung nach Anspruch 10, die insbesondere als Madenschraube ausgeführt sein kann, verhindert eine unerwünschte Verlagerung des Anbohrkörpers. Die Sicherungseinrichtung kann z. B. in Anwendungsfällen eingesetzt werden, in denen die Orientierung der Kontaktwand zur zu bearbeitenden Materialwand festliegt.

Ein Ausführungsbeispiel der Erfindung wird nachfolgend anhand der Zeichnung näher erläutert. In dieser zeigen:
- Fig. 1: einen Längsschnitt durch einen Gehäuseabschnitt einer Bohrmaschine mit einer Führungsvorrichtung zur axialen Führung eines Bohrers;

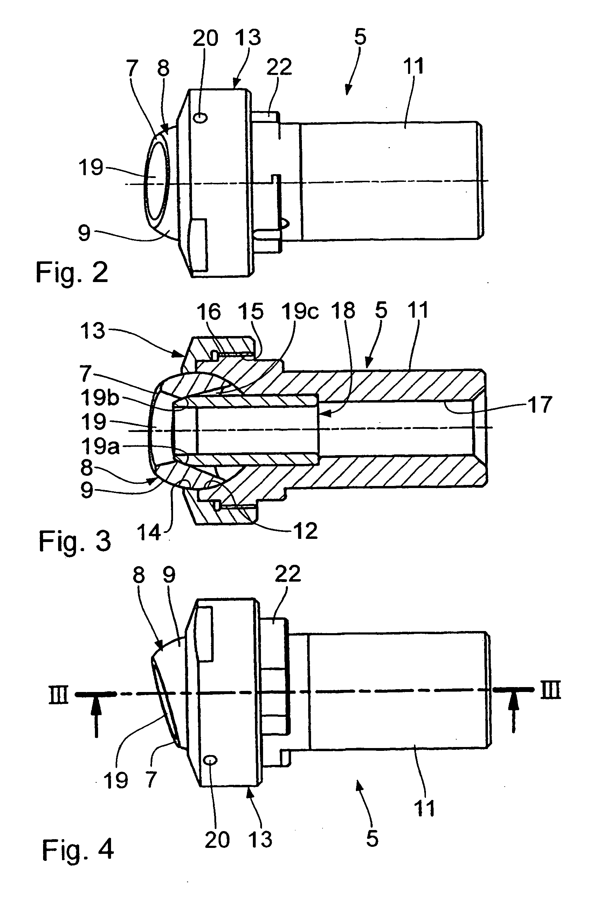

- Fig. 2: eine Seitenansicht einer Führungseinrichtung der Führungsvorrichtung von Fig. 1;
- Fig. 3: einen Längsschnitt durch die Führungseinrichtung von Fig. 2 gemäß Linie III-III in Fig. 4 und
- Fig. 4: eine weitere Seitenansicht der Führungseinrichtung.

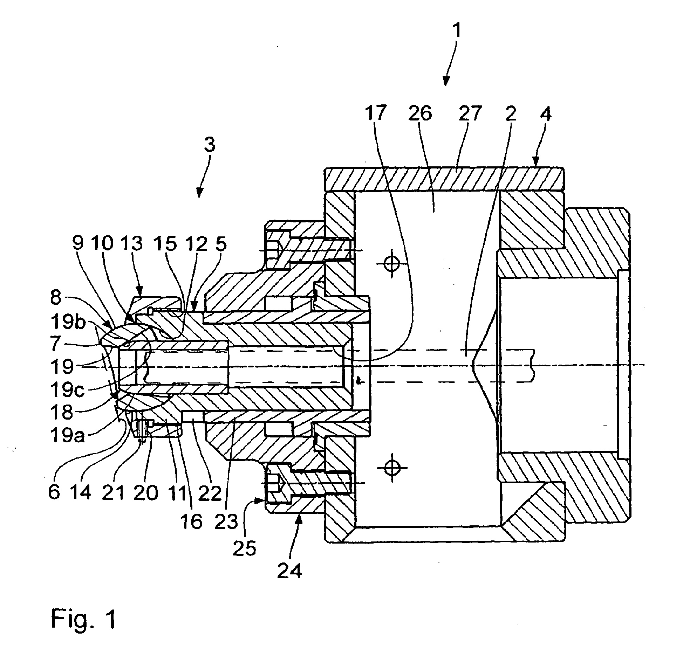

Fig. 1 zeigt einen Bohrkopf 1 einer Tieflochbohrmasehine. Vom grundsätzlichen Aufbau her ist eine derartige Tietlochbohrmaschine aus der DE 43 18 830 Cl bekannt. so dass auf eine Beschreibung anderer Komponenten als des Bohrkopfs I verzichtet werden kann. Ein in Fig. 1 nur schematisch gestrichelt und unterbrochen dargestellter Bohrer 2 ist in der Tieflochbohrmaschine mittels einer Führungsvorrichtung 3 axial relativ zu einem Gehäuse 4 der Bohrmaschine geführt. Die Führungsvorrichtung 3 umfasst eine dem zu bearbeitenden Material zugewandte vordere Führungseinrichtung 5 für den Bohrer 3 sowie eine nicht dargestellte hintere Führungseinrichtung. Eine Materialwand 6 des zu bearbeitenden Materials ist in Fig. 1 gestrichelt angedeutet.

Beim Bohren kommt mit der Materialwand 6 eine Kontaktwand 7 eines ringförmigen Anbohrkörpers 8 in Kontakt. Der Anbohrkörper 8 hat eine kugelzonenförmige Außenwand, die als erste Lagerwand 9 einer Lagereinheit 10 zur Lagerung des Anbohrkörpers 8 in einem Grundkörper 11 der vorderen Führungseinrichtung 5 dient. Die erste Lagerwand 9 liegt flächig an einer komplementär kugelzonenförmigen zweiten Lagerwand 12 des Grundkörpers 11 an.

In Anlage an der zweiten Lagerwand 12 gehalten wird der Anbohrkörper 8 über einen als Vorschraubring 13 ausgebildeten Verbindungskörper, der als Klemmkörper für den Anbohrkörper 8 dient. Der Vorschraubring 13 weist eine kugelzonenförmige dritte Lagerwand 14 auf, welche die zweite Lagerwand 12 fortsetzt. Die beiden Lagerwände 12, 14 stoßen aneinander im Bereich einer Äquatorialebene der von der Lagereinheit 10 vorgegebenen Kugelform. Über ein Innengewinde 15 ist der Vorschraubring 13 mit einem hierzu komplementären Außengewinde 16 des Grundkörpers 11 verschraubt.

Der Grundkörper 11 weist zur Aufnahme des Bohrers 2 eine zentrale Durchgangsöffnung 17 auf, die sich zur Kontaktwand 7 hin stufenförmig erweitert. In dieser Erweiterung aufgenommen ist eine Führungsbuchse 18, in welcher der Bohrer 2 geführt ist. Mit der Innenwand der Führungsbuchse 18 fluchtend ist eine Durchtrittsöffnung 19 des Anbohrkörpers 8 derart ausgeführt, dass ein Durchtritt des Bohrers 2 durch den Anbohrkörper 8 bei allen möglichen Orientierungen des Anbohrkörpers 8 zum Grundkörper 11 der vorderen Führungseinrichtung 5 gegeben ist. Ein der Durchtrittsöffnung 19 zugewandter Endabschnitt der Führungsbuchse 18 weist eine kugelzonenförmige vierte Lagerwand 19a auf, an der eine fünfte, innere Lagerwand des Anbohrkörpers 8 anliegt.

Alle Lagerwände 9, 12, 14, 19a, 19b sind Teile der Lagereinheit 10, mittels der ein Verschwenken des Anbohrkörpers 8 um den Kugelmittelpunkt der von der Lagereinheit 10 vorgegebenen Kugelfläche möglich ist. Zur Ermöglichung und zur Begrenzung des Schwenkwinkels des Anbohrkörpers 8 zur vorderen Führungseinrichtung 5 weist der Anbohrkörper 8 eine sich konusförmig erweiternde Begrenzungsausnehmung 19c auf, welche die fünfte Lagerwand 19b auf der von der Durchtrittsöffnung 19 abgewandten Seite fortsetzt.

Radial zur vom Bohrer 2 vorgegebenen Längsachse ist im Vorschraubring 13 ein Innengewinde 20 vorgesehen. In dieses ist ein hierzu komplementäres Außengewinde einer Madenschraube 21 eingeschraubt. In der in Fig. 1 dargestellten, vollständig eingeschraubten Stellung liegt das eingeschraubte Ende der Madenschraube 21 an der Außenwand des Grundkörpers 11 nahe der Verbindungsfläche zwischen der zweiten Lagerwand 12 und der dritten Lagerwand 14, also nahe der Äquatorialebene der Lagereinheit 10 an. Bei nicht bis zum Grundkörper 11 eingeschraubter Madenschraube 21 kann der Anbohrkörper 8 um den von der Lagereinheit 10 vorgegebenen Kugel-Mittelpunkt verschwenkt werden.

Über eine nach Art eines Bajonett-Verschlusses ausgestaltete Schnell-Verriegelungseinrichtung 22 ist der Grundkörper 11 an einem Verbindungskörper 23 angebracht, wobei letzterer wiederum in einem Tragkörper 24 der Führungsvorrichtung 3 festgelegt ist. Die Schnell-Verriegelungseinrichtung 22 dient zum einfachen Austauschen des Grundkörpers 11 mit dem von diesen getragenen Komponenten. Der Tragkörper 24 ist über eine Flanschverbindung 25 mit einem Spänegehäuse 26, welches Teil des Gehäuses 4 der Bohrmaschine ist, verbunden. In das Spänegehäuse 26 mündet die Durchgangsöffnung 17 des Grundkörpers 11 aus. In Fig. 1 nach oben hin wird das Spänegehäuse 26 durch eine transparente Kunststoff-Scheibe 27 abgedeckt.

Der Bohrkopf 1 wird folgendermaßen gehandhabt: Zunächst wird ein zur jeweiligen Bohranwendung passender Bohrer 2 in den Bohrkopf 1 eingesetzt. Hierzu wird zunächst eine Führungsbuchse 18 aus einem Satz von Führungsbuchsen gleicher äußeren Gestalt ausgewählt, deren Innendurchmesser dem Außendurchmesser des Bohrers 2 so entspricht, dass der Bohrer 2 in der Führungsbuchse 18 geführt ist.

Nach dem Einsetzen der passenden Führungsbuchse 18 in den Grundkörper 11 wird der Anbohrkörper 8 auf das zunächst freie Ende der Führungsbuchse 18 aufgesetzt, wobei die erste Lagerwand 9 des Anbohrkörpers 8 mit der zweiten Lagerwand 12 des Grundkörpers 11 und gleichzeitig die vierte Lagerwand 19a der Führungsbuchse 18 mit der fünften Lagerwand 19b des Anbohrkörpers 8 in Anlage kommt. Anschließend wird der Vorschraubring 13 auf dem Grundkörper 1 aufgeschraubt, bis die dritte Lagerwand 14 des Vorschraubrings 13 mit der ersten Lagerwand 9 des Anbohrkörpers 8 in Anlage kommt.

Anschließend wird der Bohrkopf 1 bei nicht eingeschraubter Madenschraube 21 zur zu bearbeitenden Materialwand 6 positioniert, bis die Kontaktwand 7 an der Materialwand 6 flächig anliegt. Hierbei passt sich die Orientierung des Anbohrkörpers 8 an die jeweilige Neigung der Materialwand 6 an der Bohrstelle an. Nach erfolgter Positionierung des Bohrkopfs 1 wird der Bohrvorgang mit dem Bohrer 2 begonnen. Die flächige Anlage der Kontaktwand 7 an der Materialwand 6 gewährleistet hierbei einen guten Abschluss des Bohrkopfs 1 mit der Materialwand 6, so dass ein Austreten von Spänen bzw. Schmiermittel verhindert ist. Durch den Anbohrkörper 8 kann zudem eine zusätzliche Führung des Bohrers 2 gewährleistet sein. Beim Bohren anfallende Späne werden in einer nicht dargestellten Längsnut im Bohrer 2 von der Bohrstelle weg hin zum Spänegehäuse 26 geführt. Der Füllgrad des Spänegehäuses 26 kann über die Kunststoff-Scheibe 27 visuell kontrolliert werden.

Eine relative Orientierung des Anbohrkörpers 8 zum Grundkörper 11 kann mit Hilfe der Madenschraube 21 gesichert werden. Hierzu wird diese in den Vorschraubring 13 eingeschraubt, so dass sie gegen den Grundkörper 11 radialen Druck ausübt. Hierdurch wird die zweite Lagerwand 12 des Grundkörpers 11 gegen die erste Lagerwand 9 des Anbohrkörpers 8 gedrückt und ein Reibschluss zwischen diesen Lagerwänden 9, 12 erzeugt, so dass ein Schwenken des Anbohrkörpers 8 in der Lagereinheit 10 verhindert bzw. erschwert ist.

## Patentansprüche

1. Bohrmaschine, insbesondere zur Tieflochbohrung,
- mit einem Bohrer (2),
- mit einem Gehäuse (4),
- mit einer Führungsvorrichtung (3) zur axialen Führung des Bohrers (2) mit einer dem zu bearbeitenden Material zugewandten Führungseinrichtung (5),
**gekennzeichnet durch**
- einen mit dem zu bearbeitenden Material über eine Kontaktwand (7) in Kontakt bringbaren Anbohrkörper (8) mit einer von der Kontaktwand (7) begrenzten Durchtrittsöffnung (19) für den Bohrer (2),
- wobei der Anbohrkörper (8) an der Führungseinrichtung (5) über eine Lagereinheit (10) derart gelagert ist, dass die Kontaktwand (7) sich hinsichtlich ihrer Orientierung zu einer Materialwand (6) des zu bearbeitenden Materials ausrichten kann, wenn die Kontaktwand (7) in Anlage an die Materialwand (6) kommt.

2. Bohrmaschine nach Anspruch 1, **dadurch gekennzeichnet, dass** die Lagereinheit (10) eine kugelzonenförmige erste Lagerwand (9) des Anbohrkörpers (8) aufweist, welche mit einer kugelzonenförmigen zweiten Lagerwand (12) der Führungseinrichtung (5) zusammenarbeitet.

3. Bohrmaschine nach Anspruch 1 oder 2, **dadurch gekennzeichnet, dass** der Anbohrkörper (8) über einen an der Führungseinrichtung (5) festgelegten Verbindungskörper (13), insbesondere einen Klemmkörper, mit der Führungseinrichtung (5) verbunden ist.

4. Bohrmaschine nach Anspruch 3, **dadurch gekennzeichnet, dass** der Verbindungskörper (13) eine kugelzonenförmige dritte Lagerwand (14) der Lagereinheit (10) umfasst.

5. Bohrmaschine nach Anspruch 3 oder 4, **dadurch gekennzeichnet, dass** der Verbindungskörper (13) derart ausgeführt ist, dass über diesen der Anpressdruck der ersten (9) an der zweiten (12) Lagerwand einstellbar ist.

6. Bohrmaschine nach einem der Ansprüche 1 bis 5, **dadurch gekennzeichnet, dass** die Führungseinrichtung (5) eine Führungsbuchse (18), in welcher der Bohrer (2) geführt ist, aufweist, wobei der Anbohrkörper (8) über die Lagereinheit (10) zusätzlich an der Führungsbuchse (18) gelagert ist.

7. Bohrmaschine nach Anspruch 6, **dadurch gekennzeichnet, dass** die Lagereinheit (10) eine Lagerwand (19b) des Anbohrkörpers (8) aufweist, welche mit einer kugelzonenförmigen Lagerwand (19a) der Führungsbuchse (18) zusammenarbeitet.

8. Bohrmaschine nach Anspruch 6 oder 7, **dadurch gekennzeichnet, dass** die Führungsbuchse (18) derart in der Führungseinrichtung (5) gehaltert ist, dass sie ausgewechselt werden kann.

9. Bohrmaschine nach einem der Ansprüche 1 bis 8, **dadurch gekennzeichnet, dass** die Führungseinrichtung (5) mit dem Anbohrkörper (8) über eine Schnell-Verriegelungseinrichtung (22) mit dem Gehäuse (4) verbunden ist.

10. Bohrmaschine nach einem der Ansprüche 1 bis 9, **gekennzeichnet durch** eine Sicherungseinrichtung (21), die derart ausgeführt ist, dass in einer Sicherungsstellung der Sicherungseinrichtung (21) ein Ausrichten der Kontaktwand (7) verhindert bzw. erschwert ist.

## Claims

1. Drilling machine, in particular for deep-hole drilling, comprising
- a drill (2),
- a housing (4),
- a guide mechanism (3) for axially guiding the drill (2), having a guide device (5) facing the material to be processed,
**characterized by**
- a drill contact body (8) which can be brought into contact with the material to be processed via a contact surface (7) and comprises a passage (19) for the drill (2), said passage being defined by the contact surface (7),
- with the drill contact body (8) being supported on the guide device (5) via a bearing unit (10) in a way as to enable the position of the contact surface (7) to be aligned with a material surface (6) of the material to be processed when the contact surface (7) is brought into contact with the material surface (6).

2. Drilling machine according to claim 1, **characterized in that** the bearing unit (10) comprises a partially spherical first bearing surface (9) of the drill contact body (8), said partially spherical first bearing surface (9) cooperating with a partially spherical second bearing surface (12) of the guide device (5).

3. Drilling machine according to claim 1 or 2, **characterized in that** the drill contact body (8) is fitted to the guide device (5) by means of a connecting body (13), in particular a clamp body, which is mounted on the guide device (5).

4. Drilling machine according to claim 3, **characterized in that** the connecting body (13) comprises a partially spherical third bearing surface (14) of the bearing unit (10).

5. Drilling machine according to claim 3 or 4, **characterized in that** the connecting body (13) is designed in a way as to provide for an adjustable contact pressure to be obtained between the first (9) and the second (12) bearing surface.

6. Drilling machine according to any one of claims 1 to 5, **characterized in that** the guide device (5) comprises a guide bush (18) for guiding the drill (2), with the drill contact body (8) being additionally supported on the guide bush (18) via the bearing unit (10).

7. Drilling machine according to claim 6, **characterized in that** the bearing unit (10) comprises a bearing surface (19b) of the drill contact body (8), said bearing surface (19b) cooperating with a partially spherical bearing surface (19a) of the guide bush (18).

8. Drilling machine according to claim 6 or 7, **characterized in that** the guide bush (18) is held in the guide device (5) in an interchangeable manner.

9. Drilling machine according to any one of claims 1 to 8, **characterized in that** the guide device (5), together with the drill contact body (8), is fitted to the housing (4) by means of a quick locking device (22).

10. Drilling machine according to any one of claims 1 to 9, **characterized by** a safety device (21) which is designed in a way as to prevent or impede alignment of the contact surface (7) when the safety device (21) is in a safety position.

## Revendications

1. Perceuse, en particulier pour le perçage de trous profonds,
- avec un foret (2),
- avec un carter (4),
- avec un dispositif de guidage (3) pour le guidage axial du foret (2) avec un dispositif de guidage (5) tourné vers le matériau à usiner,
**caractérisée par**
- un corps de perçage (8), pouvant être mis en contact avec le matériau à usiner par le biais d'une paroi de contact (7), comportant une ouverture de passage (19) pour le foret (2) délimitée par la paroi de contact (7),
- le corps de perçage (8) étant logé au niveau du dispositif de guidage (5) par le biais d'une unité de support (10) de sorte que la paroi de contact (7) peut s'aligner en ce qui concerne son orientation par rapport à une paroi de matériau (6) du matériau à usiner, lorsque la paroi de contact (7) prend appui sur la paroi de matériau (6).

2. Perceuse selon la revendication 1, **caractérisée en ce que** l'unité de support (10) présente une première paroi de support (9) en forme de zone sphérique du corps de perçage (8) qui coopère avec une deuxième paroi de support (12) en forme de zone sphérique du dispositif de guidage (5).

3. Perceuse selon la revendication 1 ou 2, **caractérisée en ce que** le corps de perçage (8) est relié au dispositif de guidage (5) par le biais d'un corps de liaison (13), en particulier un corps de serrage, fixé au niveau du dispositif de guidage (5).

4. Perceuse selon la revendication 3, **caractérisée en ce que** le corps de liaison (13) comprend une troisième paroi de support (14) en forme de zone sphérique de l'unité de support (10).

5. Perceuse selon la revendication 3 ou 4, **caractérisée en ce que** le corps de liaison (13) est réalisé de sorte qu'il est possible de régler par le biais de celui-ci la pression d'application de la première paroi de support (9) sur la deuxième paroi de support (12).

6. Perceuse selon l'une quelconque des revendications 1 à 5, **caractérisée en ce que** le dispositif de guidage (5) présente une douille de guidage (18) dans laquelle est guidé le foret (2), le corps de perçage (8) étant logé en plus au niveau de la douille de guidage (18) par le biais de l'unité de support (10).

7. Perceuse selon la revendication 6, **caractérisée en ce que** l'unité de support (10) présente une paroi de support (19b) du corps de perçage (8), qui coopère avec une paroi de support (19a) en forme de zone sphérique de la douille de guidage (18).

8. Perceuse selon la revendication 6 ou 7, **caractérisée en ce que** la douille de guidage (18) peut être maintenue dans le dispositif de guidage (5) de sorte à pouvoir la remplacer.

9. Perceuse selon l'une quelconque des revendications 1 à 8, **caractérisée en ce que** le dispositif de guidage (5) avec le corps de perçage (8) est relié au carter (4) par le biais d'un dispositif de verrouillage rapide (22).

10. Perceuse selon l'une quelconque des revendications 1 à 9, **caractérisée par** un dispositif de blocage (21), qui est réalisé de sorte que dans une position de blocage du dispositif de blocage (21), un alignement de la paroi de contact (7) est empêché et/ou rendu plus difficile.
